# EUROPEAN PATENT SPECIFICATION

(11) **EP 3 527 367 B1**
(45) Date of publication and mention of the grant of the patent: **21.10.2026**
(21) Application number: 17860491.4
(22) Date of filing: 06.10.2017
(51) Int. Cl.: B32B 27/08, B32B 7/12, B32B 21/08, B32B 21/02

(54) **DECORATIVE SHEET, MANUFACTURING METHOD THEREFOR, AND DECORATIVE MATERIAL**
DEKORFOLIE, HERSTELLUNGSVERFAHREN DAFÜR SOWIE DEKORMATERIAL
FEUILLE DÉCORATIVE, SON PROCÉDÉ DE FABRICATION ET MATÉRIAU DÉCORATIF

(30) Priority: 11.10.2016 JP 2016199962
(43) Date of publication of application: 21.08.2019
(73) Proprietor: Toppan Printing Co., Ltd., Taito-ku, Tokyo 110-0016 (JP)
(72) Inventor: KINOSHITA Kazuki, Tokyo 110-0016 (JP); HOZUMI Kengo, Tokyo 110-0016 (JP); SAITO Yuki, Tokyo 110-0016 (JP)
(74) Representative: TBK
(86) International application number: PCT/JP2017/036537
(87) International publication number: WO 2018/070356

(56) References cited:
- WO-A1-2012/133667
- JP-A- 2001 047 572
- JP-A- 2001 129 937
- JP-A- 2008 106 591
- JP-A- 2014 084 684
- JP-A- 2015 010 426
- JP-A- 2017 159 584
- JP-A- H09 290 487
- DATABASE WPI Week 200825, Derwent World Patents Index; AN 2008-D28590, XP002793559
- DATABASE WPI Week 201215, Derwent World Patents Index; AN 2012-C45534, XP002793560

## Description

### [Technical Field]

The present invention relates to a method for producing a decorative sheet, a decorative sheet obtained by the production method, and a decorative material having the decorative sheet.

### [Background Art]

Decorative sheets have been developed and advanced in the process of growth of the residential building industry. In particular, apartments and condominiums, which are collective residences, and prefabricated houses, which are individual residences, have played the leading role.

Housings have been conventionally built by using materials such as woods and stones indigenous to each region, and in a style rooted to a specific culture. However, as industrialization has spread with development of residential industry, natural materials have been replaced with artificial materials. In addition, frequent use of high grade wood materials and stone materials in recent years, which may lead to a risk of deforestation and environmental problem, also contributes to the expansion of demand for decorative sheets.

In recent years, improvements in scratch resistance of sheet surface have been required in the performance of decorative sheets, and a large number of various improvements have been reported. One of such improvements is to provide a protective layer on a front layer of a decorative sheet. In particular, use of heat-curable resin, UV-curable resin, or electronic beam-curable resin is commonly known (for example, see PTL 1).

Thus, in processing of decorative sheets into decorative materials such as decorative boards, there is often a demand to provide decorative sheets without having quality defects such as wrinkle and flare.

### [Citation List]

### [Patent Literature]

PTL 1: JP 5045180 B

### [Summary of the Invention]

### [Technical Problem]

However, in the embodiment using a UV-curable resin according to the technique described in PTL 1, flare or wrinkle of a decorative sheet may occur due to heat generated when the decorative sheet is irradiated with undue UV light. This has room for improvement.

The present invention has been made in view of the above circumstances, and aims to provide a decorative sheet exhibiting good scratch resistance while ensuring qualities such as appearance, as well as good bendability, and a method for producing the same, and a decorative material.

### [Solution to the Problem]

In order to address the above issue, the present inventors have intensively studied and found that, in production of a surface protective layer made of a UV-curable resin for improving the scratch resistance of a sheet surface, the performance is improved by specifying the amount of radiation of UV light.

The present invention is based on the above findings of the present inventors, and an aspect of the present invention for addressing the above issue is a decorative sheet including: a thermoplastic resin substrate layer; a pattern layer; a transparent thermoplastic resin layer; and a surface protective layer, which are disposed at least in this order, wherein
the surface protective layer is composed of one or more first surface protective layers provided on the transparent thermoplastic resin layer, and a second surface protective layer provided as an outermost layer having a test result according to European standard EN16094 of 3 or more and being obtainable by application of a coating liquid containing UV curable resin and subsequent irradiation with 365 nm wavelength UV light with an integrated light quantity in a range of 100 mJ/cm² or more and less than 400 mJ/cm²,
the first surface protective layer is formed with a film thickness of 1 µm or more and less than 30 µm,
the transparent thermoplastic resin layer is a polyethylene-based resin or a polypropylene-based resin with a thickness in a range of 30 µm or more and 200 µm or less, and
an overall thickness is in a range of 40 µm or more and less than 500 µm.

Further, another aspect of the present invention for addressing the above issue is a decorative material including:
a decorative sheet as defined above;
an adhesive layer provided on a surface of the thermoplastic resin substrate layer of the decorative sheet on a side opposite to that facing the pattern layer; and
a substrate which is adhered to the thermoplastic resin substrate layer via the adhesive layer.

Further, another aspect of the present invention for addressing the above issue is a method for producing a decorative sheet including the steps of:
forming a pattern layer on one surface of a thermoplastic resin substrate layer;
forming a transparent thermoplastic resin layer on the pattern layer; and
forming one or more surface protective layers on the transparent thermoplastic resin layer, wherein
the step of forming the surface protective layer is composed of a step of forming one or more first surface protective layers on the transparent thermoplastic resin layer, and a step of forming a second surface protective layer as an outermost layer on the first surface protective layer,
the step of forming the second surface protective layer is a step of forming the surface protective layer by application of a coating liquid containing UV-curable resin and subsequent irradiation with 365 nm wavelength UV light with an integrated light quantity in a range of 100 mJ/cm² or more and less than 400 mJ/cm², and
the transparent thermoplastic resin layer is a polyethylene-based resin or a polypropylene-based resin with a thickness in a range of 30 µm or more and 200 µm or less, and an overall thickness is in a range of 40 µm or more and less than 500 µm.

### [Advantageous Effects of Invention]

According to an aspect of the present invention, it is possible to provide a decorative sheet exhibiting good scratch resistance while ensuring qualities such as appearance, as well as good bendability, a method for producing the same, and a decorative material.

### [Brief Description of the Drawings]

Fig. 1 is a cross-sectional view illustrating a configuration of a decorative sheet according to an embodiment of the present invention.
Fig. 2 is a cross-sectional view illustrating a configuration of a decorative material according to an embodiment of the present invention.

### [Description of Embodiments]

In the following detailed description, specific details will be described in order to provide a complete understanding of an embodiment of the present invention. However, it is apparent that one or more embodiments can be carried out without such specific details. Further, for the purpose of simplification of the drawings, known structures and apparatuses may be schematically illustrated.

Hereinafter, one embodiment of the present invention will now be described with reference to the drawings.

### (Decorative Sheet)

### <Configuration>

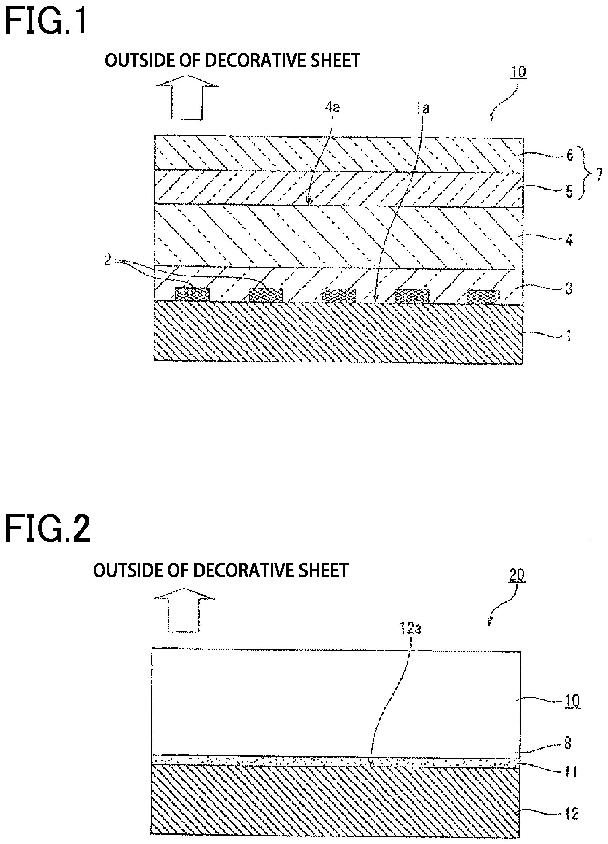

As shown in Fig. 1, a decorative sheet (hereinafter, also referred to as a sheet) 10 of the present embodiment includes a thermoplastic resin substrate layer 1, a pattern layer 2 provided on a front surface 1a of the thermoplastic resin substrate layer 1, a transparent adhesive layer 3 provided on the pattern layer 2, a transparent thermoplastic resin layer 4 provided on the transparent adhesive layer 3, and a surface protective layer 7 provided on the transparent thermoplastic resin layer 4. An outermost layer, which is located at least on the outermost position of the surface protective layer 7, contains an ionizing radiation-curable resin as a main component.

An ionizing radiation-curable resin is generally a synthetic resin which chemically changes from liquid to solid in response to application of the energy of ionizing radiation (for example, UV light, α-rays, β-rays, or γ-rays). In the present embodiment, the ionizing radiation-curable resin is UV-curable resin, and the surface protective layer 7 is a laminate film composed of a plurality of layers. Fig. 1 illustrates the surface protective layer 7 which is a two-layered laminate film composed of a first surface protective layer 5 and a second surface protective layer 6 in which the second surface protective layer 6 is provided as an outermost layer located on the outermost position of the surface protective layer 7.

Further, the expression "provided on the pattern layer 2" described above regarding the transparent adhesive layer 3 means that the transparent adhesive layer 3 is provided on the pattern layer 2, including a case where another layer is interposed between the pattern layer 2 and the transparent adhesive layer 3. The expression "provided on" as used herein for describing the relationship between other layers also has the same meaning.

Moreover, the decorative sheet 10 further includes a thermoplastic resin rear surface layer 8 provided on a rear surface 1b of the thermoplastic resin substrate layer 1. In the decorative sheet 10 shown in Fig. 1, the thermoplastic resin rear surface layer 8, the thermoplastic resin substrate layer 1, the pattern layer 2, the transparent adhesive layer 3, and the transparent thermoplastic resin layer 4 are laminated in this order. Further, the overall thickness of the decorative sheet 10 is in the range of 40 µm or more and less than 500 µm, and preferably in the range of 60 µm or more and 425 µm or less.

Hereinafter, each configuration of the decorative sheet 10 will be more specifically described.

### (1) Thermoplastic Resin Substrate Layer

The thermoplastic resin substrate layer 1 is made of, for example, a colored thermoplastic resin. The thermoplastic resin may be, for example, vinyl chloride resin, acrylic resin, or polyolefin-based polypropylene resin or polyethylene resin. Among others, polyolefin-based resins may be preferably used in view of environmental compatibility, processability, and price. Grades and compositions of the resin can also be selected taking into consideration ease of sheeting, printability, suitability for bending process.

The thermoplastic resin substrate layer 1 is preferably a polyolefin-based resin, polyester-based resin, or acrylic resin with a thickness in the range of 10 µm or more and 200 µm or less. When the thickness of the thermoplastic resin substrate layer 1 is smaller than 10 µm, concealability and processability may be reduced. Further, when the thickness of the thermoplastic resin substrate layer 1 is larger than 200 µm, performance such as bending processability may be reduced.

In coloring of the thermoplastic resin substrate layer 1, hue can be appropriately selected to conceal the substrate to which the decorative sheet is bonded, or as a base color of the pattern layer 2. For example, in sheeting of the thermoplastic resin, colorant such as a pigment may be mixed or kneaded therein for coloring. Alternatively, prior to providing the pattern layer 2, a coloring layer may be provided as a solid ink layer under the pattern layer 2 by using a coating or printing technique.

### (2) Pattern Layer

The pattern layer 2 may be provided using a known printing technique. When the thermoplastic resin substrate layer 1 is prepared in the form of a roll, printing for forming the pattern layer 2 can be performed in a roll-to-roll printing apparatus. The printing technique is not particularly limited, and for example, gravure printing may be used considering productivity and quality of the design.

Any pattern may be used for the pattern layer considering designability as the decorative material. For wooden patterns, various types of grain patterns are often preferably used. Besides the grain patterns, cork patterns may also be used. For example, in the case where a pattern represents a floor of stone such as marble, a pattern of marble stone grain or the like may be used. In addition to the patterns of such natural materials, artificial patterns such as those in a motif of the natural materials or geometric patterns may be used as well.

The printing ink for forming the pattern layer 2 is not particularly limited, and is suitably selected and used depending on the printing method. Specifically, the ink is preferably selected considering adhesion and printability to the thermoplastic resin substrate layer 1, weather resistance as a decorative material, and the like.

If necessary, an adhesive layer (not shown) may be provided on the pattern layer 2 for the purpose of improving adhesion between the pattern layer 2 and the transparent adhesive layer 3. The resin used for the adhesive layer (not shown) is not particularly limited, and may be a two-part curable urethane resin, which is applied by using a coating machine, gravure printing machines, or the like.

### (3) Transparent Adhesive Layer

The transparent adhesive layer 3 is provided for the purpose of enhancing adhesion of the thermoplastic resin substrate layer 1 and the pattern layer 2 to the transparent thermoplastic resin layer 4. When these layers are firmly bonded to each other, the decorative sheet 10 can obtain bending processability for following curved surfaces and right-angle surfaces. The transparent adhesive layer 3 is colorless and transparent, or colored and transparent, or may be colored to a degree that allows visible light to pass through.

The transparent adhesive layer 3 is preferably a polyethylene-based resin or a polypropylene-based resin with a thickness in the range of 5 µm or more and 30 µm or less. When the thickness of the transparent adhesive layer 3 is smaller than 5 µm, peeling strength may be reduced due to insufficient adhesion. Further, when the thickness of the transparent adhesive layer 3 is larger than 30 µm, performance such as scratch resistance or load resistance may be reduced. The transparent adhesive layer 3 is more preferably a polyethylene-based resin or a polypropylene-based resin with a thickness in the range of 10 µm or more and 30 µm or less.

### (4) Transparent Thermoplastic Resin Layer

The transparent thermoplastic resin layer 4 is a polyolefin-based polypropylene resin or polyethylene resin. Among others, polyolefin-based resins are used in view of environmental compatibility, processability, and price.

Grades and compositions of the resin can also be selected taking into consideration ease of sheeting, printability, suitability for bending process. In particular, for bending processability, prevention of occurrence of whitening or cracking in a bent portion is of importance.

The transparent adhesive layer 3 and the transparent thermoplastic resin layer 4 may be formed, for example, by co-extrusion by which they are simultaneously extruded. The transparent thermoplastic resin layer 4 imparts a thickness or depth effect to the decorative sheet in terms of design, and also improves a weather resistance and abrasion resistance of the decorative sheet. The transparent thermoplastic resin layer 4 is colorless and transparent, or colored and transparent, or may be colored to a degree that allows some visible light to pass through.

The transparent thermoplastic resin layer 4 is a polyethylene-based resin or polypropylene-based resin with a thickness of 30 µm or more and 200 µm or less. When the thickness of the transparent thermoplastic resin layer 4 is smaller than 30 µm, performance such as scratch resistance and abrasion resistance may be reduced. Further, when the thickness of the transparent thermoplastic resin layer 4 is larger than 200 µm, performance such as bending processability may be reduced. The transparent thermoplastic resin layer 4 is more preferably a polyethylene-based resin or polypropylene-based resin with a thickness of 50 µm or more and 150 µm or less.

### (5) Surface Protective Layer

The surface protective layer 7 is formed on the transparent thermoplastic resin layer 4. As described above, the outermost layer, which is located at least on the outermost position of the surface protective layer 7 contains an ionizing radiation-curable resin as a main component. Further, the thickness of the surface protective layer 7 is, for example, in the range of 3 µm or more and 50 µm or less. In the present embodiment, two layers of the first surface protective layer 5 and the second surface protective layer 6 are provided as the surface protective layer 7.

The surface protective layer 7 is a laminate film composed of a plurality of layers. Fig. 1 illustrates the surface protective layer 7, which is a two-layered laminate film, and particularly, a layer located on the outermost position is the second surface protective layer 6 (outermost layer). As described above, the second surface protective layer 6, which is located at least on the outermost position of the surface protective layer 7, includes UV-curable resin, and is formed when irradiated with 365nm wavelength UV light with an integrated light quantity in the range of 100 mJ/cm² or more and less than 400 mJ/cm².

Here, the UV-curable resin refers to a synthetic resin which chemically changes from liquid to solid in response to application of the energy of UV light. When a small amount of UV light energy is applied, resin hardening is insufficient, leading to a semisolid state. On the other hand, when a large amount of UV light energy is applied, heat is generated, which causes sheet defects such as flare and wrinkle.

Here, examples of the above UV-curable resin include polyfunctional HDI isocyanurate oligomer. Further, examples of a photoinitiator used as a sub-component of the UV-curable resin includes alkyl phenone-based photopolymerization initiator. Further, examples of the above thermosetting resin include a combination of polyfunctional acrylic polyol (base resin) and HDI-based isocyanate compound (hardener). Furthermore, layers including the surface protective layer 7 may also include a matting material such as a silica filler.

The UV-curable resin is not particularly limited, and may be transparent resins which contain a prepolymer (including oligomer) and/or monomer containing radical polymerizable double bond, which is polymerizable and crosslinkable by irradiation with UV light, in a molecule as a main component. The above prepolymer or monomer may be used singly or as a mixture thereof. The curing reaction is typically a crosslinking curing reaction.

Specifically, examples of the above prepolymer or monomer include compounds containing a radical polymerizable unsaturated group such as (meth)acryloyl group and (meth)acryloyloxy group, a cationic polymerizable functional group such as epoxy group, or the like in a molecule. Further, polyene/thiol-based prepolymer made of a combination of polyene and polythiol is also preferred. The (meth)acryloyl group described herein refers to acryloyl group or methacryloyl group.

Examples of the prepolymer containing a radical polymerizable unsaturated group include polyester (meth)acrylate, urethane (meth)acrylate, epoxy (meth)acrylate, melamine (meth)acrylate, triazine (meth)acrylate, and silicone (meth)acrylate. The molecular weight is preferably in the order of 250 to 100,000.

Examples of the monomer containing a radical polymerizable unsaturated group include monofunctional monomers such as methyl (meth)acrylate, 2-ethylhexyl (meth)acrylate, and phenoxyethyl (meth)acrylate. Further, examples of the polyfunctional monomer include diethylene glycol di(meth)acrylate, propylene glycol di(meth)acrylate, trimethylolpropane tri(meth)acrylate, trimethylolpropane ethylene oxide tri(meth)acrylate, dipentaerythritol tetra(meth)acrylate, dipentaerythritol penta(meth)acrylate, and dipentaerythritol hexa(meth)acrylate.

Examples of the prepolymer containing a cationic polymerizable functional group include prepolymers of epoxy-based resins such as bisphenol type epoxy resin and novolak type epoxy compound, and vinyl ether-based resins such as fatty acid vinyl ether and aromatic vinyl ether. Further, examples of the thiol include polythiol such as trimethylolpropane trithioglycolate and pentaerythritol tetrathioglycolate. Examples of the polyene include those having allyl alcohol added on both ends of polyurethane containing diol and diisocyanate.

The UV light source may be a light source such as a super high-pressure mercury lamp, high pressure mercury lamp, low pressure mercury lamp, carbon arc lamp, black light, or metal halide lamp.

The surface protective layer 7 has an important role in determining the quality of bending processability, scratch resistance, and cleanability. Specifically, the role of the outermost layer is of importance with regard to scratch resistance, and physical properties of the outermost layer directly affect the scratch resistance of the sheet. In this regard, the present inventors have intensively studied and found the following findings. That is, the present inventors have found that the second surface protective layer 6 (outermost layer), which is located at least on the outermost surface of the surface protective layer 7, includes UV-curable resin, and satisfies the scratch resistance of the surface of the decorative sheet 10 when irradiated with 365 nm wavelength UV light with an integrated light quantity in the range of 100 mJ/cm² or more and less than 400 mJ/cm². As a result, the test result according to European standard EN16094 for the outermost surface of the surface protective layer 7 is 3 or more. The term "outermost surface" as described herein refers to the outermost surface of the layer located on the outermost position (the second surface protective layer 6).

However, when the amount of energy applied to the UV-curable resin is too high, the decorative sheet 10 undergoes softening or shrinkage due to heat rays from the light source, heat generated during hardening of the surface protective layer 7, or heat due to heat absorption of the decorative sheet 10 itself. As a consequence, defects such as flare and wrinkle of the decorative sheet may occur.

In this regard, the present inventors have intensively studied and found that the defects of the decorative sheet 10 caused by the UV light energy of 100 mJ/cm² or more can be reduced when the outermost surface of the surface protective layer 7 satisfies the conditions of the test result according to the above standard, and the overall thickness of the decorative sheet 10 is in the range of 40 µm or more and less than 500 µm.

Accordingly, when the test result according to European standard EN16094 for the outermost surface of the surface protective layer 7 is 3 or more, and the overall thickness of the decorative sheet 10 is in the range of 40 µm or more and less than 500 µm, the decorative sheet exhibiting good scratch resistance while ensuring qualities such as appearance, as well as good bendability can be provided.

### <Production Method of Decorative Sheet>

A method for producing the decorative sheet 10 according to the present embodiment includes the following steps (1) to (3).
(1) A step of forming a pattern layer on one surface of the thermoplastic resin substrate layer
(2) A step of forming a transparent thermoplastic resin layer on the pattern layer
(3) A step of forming a surface protective layer on the transparent thermoplastic resin layer

Here, the above step (3) is a step of forming the surface protective layer by application of a coating liquid containing UV-curable resin and subsequent irradiation with 365 nm wavelength UV light with an integrated light quantity in the range of 100 mJ/cm² or more and less than 400 mJ/cm².

In addition, the decorative sheet 10 is formed to have the overall thickness in the range of 40 µm or more and less than 500 µm. This thickness is preferably in the range of 60 µm or more and 425 µm or less.

Further, the thermoplastic resin substrate layer is a polyolefin-based resin or polyester-based resin with a thickness in the range of 30 µm or more and 200 µm or less.

In the method for producing the decorative sheet 10 of the present invention, the aforementioned step of forming a surface protective layer includes a step of forming one or more first surface protective layers on the transparent thermoplastic resin layer and a step of forming a second surface protective layer as an outermost layer on the first surface protective layer.

The step of forming a second surface protective layer is a step of forming the second surface protective layer by application of a coating liquid containing UV-curable resin to the transparent thermoplastic resin layer and subsequent irradiation with 365 nm wavelength UV light with an integrated light quantity in the range of 100 mJ/cm² or more and less than 400 mJ/cm². A film thickness of the first surface protective layer is preferably in the range of 1 µm or more and less than 30 µm.

Since the step of forming a surface protective layer is a step of forming the surface protective layer by application of a coating liquid containing UV-curable resin and subsequent irradiation with 365 nm wavelength UV light with an integrated light quantity in the range of 100 mJ/cm² or more and less than 400 mJ/cm², and the overall thickness is in the range of 40 µm or more and less than 500 µm, the decorative sheet exhibiting good scratch resistance while ensuring qualities such as appearance, as well as good bendability, can be provided.

### (Decorative Material)

Next, a decorative material according to an embodiment of the present invention will be described.

As shown in Fig. 2, a decorative material 20 of the present embodiment includes the aforementioned decorative sheet 10 and a wooden substrate 12. For example, the decorative sheet 10 is provided on one surface 12a of the wooden substrate 12 to form a decorative material 20.

An adhesive layer 11 is provided between the wooden substrate 12 and the decorative sheet 10 such that the wooden substrate 12 and the decorative sheet 10 are adhered via the adhesive layer 11.

Next, the adhesive layer 11 and the wooden substrate 12 are more specifically described.

### (1) Wooden Substrate

The wooden substrate 12 is, for example, a plywood, particle board, medium density fiberboard (MDF), or hardboard. The wooden substrate 12 has a thickness in the range of 1 mm or more and 50 mm or less, for example.

### (2) Adhesive Layer

The adhesive layer 11 is, for example, thermoplastic resin-based, thermosetting resin-based, or rubber (elastomer)-based adhesive. These additives can be suitably selected from known additives or commercially available additives.

### <Advantageous Effect of Embodiment>

According to an embodiment of the present invention, the step of forming a surface protective layer is performed by application of a coating liquid containing UV-curable resin and subsequent irradiation with 365 nm wavelength UV light with an integrated light quantity in the range of 100 mJ/cm² or more and less than 400 mJ/cm², and the overall thickness is in the range of 40 µm or more and less than 500 µm. Accordingly, the method for producing a decorative sheet exhibiting good scratch resistance while ensuring qualities such as appearance, as well as good bendability, can be provided.

Further, according to an embodiment of the present invention, the test result according to European standard EN16094 for the outermost surface of the surface protective layer is 3 or more, and the overall thickness of the decorative sheet is in the range of 40 µm or more and less than 500 µm. Accordingly, the decorative sheet and the decorative material exhibiting good scratch resistance while ensuring qualities such as appearance, as well as good bendability, can be provided.

### (Other Configuration Examples)

The above embodiment has been described for the case where the decorative material 20 is formed from the decorative sheet 10 shown in Fig. 1. However, in the present embodiment, a decorative material provided with a moisture-proof sheet may be provided on a surface of the decorative sheet 10 on a side opposite to that facing the wooden substrate 12 with an adhesive layer or the like interposed therebetween. With this configuration as well, the effects of the above embodiment can be obtained.

### Examples

The present invention will be further described in detail by the following examples. However, the present invention is not limited to these examples.

### (Reference Example 1)

A decorative sheet similar to the one shown in Fig. 1 was produced by the following materials and procedures.
(1) A 25 µm-thick polypropylene film was prepared as a thermoplastic resin substrate layer. A pattern layer was provided on one surface of the polypropylene film by printing a wood grain pattern using gravure ink ("Lamistar" manufactured by Toyo Ink Manufacturing Co., Ltd.) by a gravure printing machine.
(2) Then, a two-part urethane-based primer resin containing silica particles was applied by gravure coating to a surface of the thermoplastic resin substrate layer on a side opposite to that facing the pattern layer at a dry thickness of 1 µm.
(3) Then, a two-part urethane resin-based adhesive containing polyester polyol as a base resin and isophorone diisocyanate as a hardener was applied on the pattern layer at a dry thickness of 1 g/m².
(4) Then, 4 µm of a transparent adhesive layer (maleic acid-modified polypropylene resin) and 20 µm of a transparent thermoplastic resin layer containing homopolypropylene (manufactured by Prime Polymer Co., Ltd.) as a main component were co-extruded such that the transparent adhesive layer faced the pattern layer.
(5) Then, a thermosetting acrylic urethane resin (manufactured by DIC Graphics Corporation) was applied as a first surface protective layer on a surface of the transparent thermoplastic resin layer at a dry thickness of 3 µm.
(6) Then, as an outermost layer, a UV-curable urethane acrylate resin (manufactured by DIC Graphics Corporation) and a thermosetting acrylic urethane resin (manufactured by DIC Graphics Corporation) were mixed at a mixture ratio of 6:4 based on mass ratio. Then, the mixed resin was applied at a dry thickness of 6 µm. Subsequently, the applied resin was hardened by UV light radiation (high pressure mercury lamp, 300 mJ/ cm²) to thereby form a decorative sheet.

### (Example 2)

A decorative sheet of Example 2 was produced by the same procedure as that of Reference Example 1 except that the overall thickness of the decorative sheet was 160 µm, the thickness of the thermoplastic resin substrate layer was 60 µm, the thickness of the transparent thermoplastic resin layer was 85 µm, and the integrated light quantity of UV light radiation was 200 mJ/cm².

### (Example 3)

A decorative sheet of Example 3 was produced by the same procedure as that of Reference Example 1 except that the overall thickness of the decorative sheet was 215 µm, the thickness of the thermoplastic resin substrate layer was 60 µm, the thickness of the transparent thermoplastic resin layer was 140 µm, and the integrated light quantity of UV light radiation was 200 mJ/cm².

### (Reference Example 4)

A decorative sheet of Example 4 was produced by the same procedure as that of Reference Example 1 except that the overall thickness of the decorative sheet was 425 µm, the thickness of the thermoplastic resin substrate layer was 60 µm, the thickness of the transparent thermoplastic resin layer was 350 µm, and the integrated light quantity of UV light radiation was 100 mJ/cm².

### (Reference Example 5)

A decorative sheet of Example 5 was produced by the same procedure as that of Reference Example 1 except that the overall thickness of the decorative sheet was 40 µm, the thickness of the thermoplastic resin substrate layer was 10 µm, and the thickness of the transparent thermoplastic resin layer was 15 µm.

### (Reference Example 6)

A decorative sheet of Example 6 was produced by the same procedure as that of Reference Example 1 except that the overall thickness of the decorative sheet was 495 µm, the thickness of the thermoplastic resin substrate layer was 60 µm, and the thickness of the transparent thermoplastic resin layer was 420 µm.

### (Example 7)

A decorative sheet of Example 7 was produced by the same procedure as that of Reference Example 1 except that the overall thickness of the decorative sheet was 160 µm, the thickness of the thermoplastic resin substrate layer was 60 µm, the thickness of the transparent thermoplastic resin layer was 85 µm, and the integrated light quantity of UV light radiation was 380 mJ/cm².

### (Comparative Example 1)

A decorative sheet of Comparative Example 1 was produced by the same procedure as that of Reference Example 1 except that the overall thickness of the decorative sheet was 35 µm, the thickness of the thermoplastic resin substrate layer was 10 µm, and the thickness of the transparent thermoplastic resin layer was 10 µm.

### (Comparative Example 2)

A decorative sheet of Comparative Example 2 was produced by the same procedure as that of Reference Example 1 except that the overall thickness of the decorative sheet was 575 µm, the thickness of the thermoplastic resin substrate layer was 60 µm, the thickness of the transparent thermoplastic resin layer was 500 µm, and the integrated light quantity of UV light radiation was 100 mJ/cm².

### (Comparative Example 3)

A decorative sheet of Comparative Example 3 was produced by the same procedure as that of Reference Example 1 except that the overall thickness of the decorative sheet was 215 µm, the thickness of the thermoplastic resin substrate layer was 60 µm, the thickness of the transparent thermoplastic resin layer was 140 µm, and the integrated light quantity of UV light radiation was 80 mJ/cm².

### (Comparative Example 4)

A decorative sheet of Comparative Example 4 was produced by the same procedure as that of Reference Example 1 except that the overall thickness of the decorative sheet was 425 µm, the thickness of the thermoplastic resin substrate layer was 60 µm, the thickness of the transparent thermoplastic resin layer was 350 µm, and the integrated light quantity of UV light radiation was 400 mJ/cm².

### (Performance Evaluation)

The decorative sheets of Reference Examples 1 and 4 to 6, Examples 2, 3 and 7 and Comparative Examples 1 to 4 were bonded to a surface of a 3 mm-thick MDF (hardwood). In bonding the decorative sheet to the MDF, a two-part aqueous emulsion adhesive ("Rikabond" manufactured by Chirika Co., Ltd. (mass ratio BA-10L/BA-11B = 100 : 2.5)) was applied as an adhesive at a grammage of 100 g/m² in a wet state. After the bonding using the above adhesive, aging was performed for 24 hours to thereby provide a decorative material.

The decorative material thus obtained was evaluated by the following process. Table 1 shows the evaluation results.

### <Micro-scratch Test>

The test procedure complies with European standard "EN 16094." In two test procedures, i.e., MSR-A and MSR-B, which are evaluated on a 1 to 5 scale, 2 or lower was rated as poor, 3 was rated as good, and 4 or higher was rated as excellent. Table 1 shows the evaluation results.

### <Sheet Appearance>

The degree of flare and wrinkle were evaluated. Table 1 shows the evaluation results. The evaluation criteria were as follows.

Excellent: No flare or wrinkle was observed on the sheet.

Good: Almost no flare or wrinkle was observed on the sheet.

Poor: Flare or wrinkle was observed on the sheet.

### <Bendability>

The decorative sheet, which was bent at 90 degrees, was evaluated as poor when large cracks occurred, good when cracks occurred to a small extent, and excellent when no cracks occurred. Table 1 shows the evaluation results.

**[Table 1]**

| | Thickness of layers [µm] | | | | Integrated light quantity (mJ/cm²) | Evaluation | | | |
|---|---|---|---|---|---|---|---|---|---|
| | Overall sheet | Substrate | Thermoplastic resin layer | First surface protective layer | | Micro-scratch test | | Sheet appearance | Bendability |
| | | | | | | MSR-A | MSR-B | | |
| Reference Example 1 | 60 | 25 | 20 | 3 | 300 | Excellent | Excellent | Good | Excellent |
| Example 2 | 160 | 60 | 85 | 3 | 200 | Excellent | Excellent | Excellent | Excellent |
| Example 3 | 215 | 60 | 140 | 3 | 200 | Excellent | Excellent | Excellent | Good |
| Reference Example 4 | 425 | 60 | 350 | 3 | 100 | Good | Good | Excellent | Good |
| Reference Example 5 | 40 | 10 | 15 | 3 | 300 | Excellent | Excellent | Good | Excellent |
| Reference Example 6 | 495 | 60 | 420 | 3 | 300 | Excellent | Excellent | Good | Good |
| Example 7 | 160 | 60 | 85 | 3 | 380 | Excellent | Excellent | Good | Excellent |
| Comparative Example 1 | 35 | 10 | 10 | 3 | 300 | Excellent | Excellent | Poor | Excellent |
| Comparative Example 2 | 575 | 60 | 500 | 3 | 100 | Good | Good | Excellent | Poor |
| Comparative Example 3 | 215 | 60 | 140 | 3 | 80 | Poor | Poor | Excellent | Good |
| Comparative Example 4 | 425 | 60 | 350 | 3 | 400 | Excellent | Excellent | Poor | Good |

As shown in Table 1, it was found that the decorative sheets of Reference Examples 1 and 4 to 6 and Examples 2, 3 and 7, which were formed by irradiation with 365 nm wavelength UV light with an integrated light quantity in the range of 100 mJ/cm² or more and less than 400 mJ/cm² in the step of forming a surface protective layer that constitutes the decorative sheet and formed to have the overall thickness in the range of 40 µm or more and less than 500 µm had good scratch resistance (micro-scratch test), sheet appearance, and bendability. In particular, it was found that the decorative materials of Reference Examples 1, 5 and 6 and Examples 2, 3 and 7 had particularly good scratch resistance (micro-scratch test). Further, it was found that the decorative materials of Examples 2 and 3 and Reference Example 4 had particularly good sheet appearance, and the decorative materials of Reference Examples 1 and 5 and Examples 2 and 7 had particularly good bendability.

Therefore, according to the present invention, it is possible to provide a decorative sheet exhibiting good scratch resistance while ensuring qualities such as appearance, as well as good bendability, and a method for producing the same, and a decorative material.

### [Industrial Applicability]

A decorative sheet and a method for producing the same, and a decorative material according to the present invention can be suitably applied to floor materials for houses, shops, offices, gymnasiums, and the like, and other applications.

### [Reference Signs List]

1: Thermoplastic resin substrate layer
2: Pattern layer
3: Transparent adhesive layer
4: Transparent thermoplastic resin layer
5: First surface protective layer
6: Second surface protective layer (outermost layer)
7: Surface protective layer
10: Decorative sheet
11: Adhesive layer
12: Wooden substrate
20: Decorative material

## Claims

1. A decorative sheet (10) comprising:
a thermoplastic resin substrate layer (1);
a pattern layer (2);
a transparent thermoplastic resin layer (4); and
a surface protective layer (7), which are disposed at least in this order, wherein
the surface protective layer (7) is composed of one or more first surface protective layers (5) provided on the transparent thermoplastic resin layer (4), and a second surface protective layer (6) provided as an outermost layer having a test result according to European standard EN16094 of 3 or more and being obtainable by application of a coating liquid containing UV curable resin and subsequent irradiation with 365 nm wavelength UV light with an integrated light quantity in a range of 100 mJ/cm² or more and less than 400 mJ/cm²,
the first surface protective layer (5) is formed with a film thickness of 1 µm or more and less than 30 µm,
the transparent thermoplastic resin layer (4) is a polyethylene-based resin or a polypropylene-based resin with a thickness in a range of 30 µm or more and 200 µm or less, and
an overall thickness is in a range of 40 µm or more and less than 500 µm.

2. The decorative sheet (10) according to claim 1, wherein the thermoplastic resin substrate layer (1) is a polyolefin-based resin or a polyester-based resin with a thickness in a range of 10 µm or more and 200 µm or less.

3. The decorative sheet (10) according to claim 1 or 2, wherein the transparent thermoplastic resin layer (4) has a thickness in a range of 50 µm or more and 150 µm or less.

4. The decorative sheet (10) according to any one of claims 1 to 3, further comprising a transparent adhesive layer (3), the transparent adhesive layer (3) is provided on the pattern layer (2) and the transparent thermoplastic resin layer (4) is provided on the transparent adhesive layer (3).

5. The decorative sheet (10) according to claim 4, wherein the transparent adhesive layer (3) is a polyethylene-based resin or a polypropylene-based resin with a thickness in a range of 5 µm or more and 30 µm or less.

6. The decorative sheet (10) according to claim 5, wherein the transparent adhesive layer (3) has a thickness in a range of 10 µm or more and 30 µm or less.

7. A decorative material (20) comprising:
the decorative sheet (10) according to any one of claims 1 to 6;
an adhesive layer (11) provided on a surface of the thermoplastic resin substrate layer (1) of the decorative sheet (10) on a side opposite to that facing the pattern layer (2); and
a substrate which is adhered to the thermoplastic resin substrate layer (1) via the adhesive layer (11).

8. A method for producing a decorative sheet (10), comprising the steps of:
forming a pattern layer (2) on one surface of a thermoplastic resin substrate layer (1);
forming a transparent thermoplastic resin layer (4) on the pattern layer (2); and
forming a surface protective layer (7) on the transparent thermoplastic resin layer (4), wherein
the step of forming the surface protective layer (7) is composed of a step of forming one or more first surface protective layers (5) on the transparent thermoplastic resin layer (4), and a step of forming a second surface protective layer (6) as an outermost layer on the first surface protective layer (5),
the step of forming the second surface protective layer (6) is a step of forming the second surface protective layer (6) by application of a coating liquid containing UV-curable resin onto the first surface protective layer (5) and subsequent irradiation with 365 nm wavelength UV light with an integrated light quantity in a range of 100 mJ/cm² or more and less than 400 mJ/cm², and
the transparent thermoplastic resin layer (4) is a polyethylene-based resin or a polypropylene-based resin with a thickness in a range of 30 µm or more and 200 µm or less, and an overall thickness is in a range of 40 µm or more and less than 500 µm.

9. The method for producing a decorative sheet (10) according to claim 8, wherein the step of forming a transparent thermoplastic resin layer (4) on the pattern layer (2) comprises forming a transparent adhesive layer (3) and the transparent thermoplastic resin layer (4) on the pattern layer (2) by co-extrusion.

## Patentansprüche

1. Dekorfolie (10), die umfasst:
eine thermoplastisches-Harz-Substratschicht (1) aus;
eine Musterschicht (2);
eine transparente thermoplastische Harzschicht (4); und
eine Oberflächenschutzschicht (7), die zumindest in dieser Reihenfolge angeordnet sind, wobei
die Oberflächenschutzschicht (7) aus einer oder mehreren ersten Oberflächenschutzschichten (5) aufgebaut ist, die auf der transparenten thermoplastischen Harzschicht (4) vorgesehen sind, sowie einer zweiten Oberflächenschutzschicht (6), die als eine äußerste Schicht vorgesehen ist und ein Prüfergebnis gemäß der europäischen Norm EN 16094 von 3 oder mehr aufweist und durch Aufbringen einer Beschichtungsflüssigkeit, die UV-härtbares Harz enthält, und anschließende Bestrahlung mit UV-Licht der Wellenlänge 365 nm mit einer integrierten Lichtmenge im Bereich von 100 mJ/cm² oder mehr und weniger als 400 mJ/cm² erhältlich ist,
wobei die erste Oberflächenschutzschicht (5) mit einer Schichtdicke von 1 µm oder mehr und weniger als 30 µm ausgebildet ist,
die transparente thermoplastische Harzschicht (4) ein Harz auf Polyethylenbasis oder ein Harz auf Polypropylenbasis mit einer Dicke im Bereich von 30 µm oder mehr und 200 µm oder weniger ist, und
die Gesamtdicke im Bereich von 40 µm oder mehr und weniger als 500 µm liegt.

2. Dekorfolie (10) nach Anspruch 1, wobei die thermoplastisches-Harz-Substratschicht (1) ein Harz auf Polyolefinbasis oder ein Harz auf Polyesterbasis mit einer Dicke im Bereich von 10 µm oder mehr und 200 µm oder weniger ist.

3. Dekorfolie (10) nach Anspruch 1 oder 2, wobei die transparente thermoplastische Harzschicht (4) eine Dicke im Bereich von 50 µm oder mehr und 150 µm oder weniger aufweist.

4. Dekorfolie (10) nach einem der Ansprüche 1 bis 3, die ferner eine transparente Haftschicht (3) umfasst, wobei die transparente Haftschicht (3) auf der Musterschicht (2) vorgesehen ist und die transparente thermoplastische Harzschicht (4) auf der transparenten Haftschicht (3) vorgesehen ist.

5. Dekorfolie (10) nach Anspruch 4, wobei die transparente Haftschicht (3) ein Harz auf Polyethylenbasis oder ein Harz auf Polypropylenbasis mit einer Dicke im Bereich von 5 µm oder mehr und 30 µm oder weniger ist.

6. Dekorfolie (10) nach Anspruch 5, wobei die transparente Haftschicht (3) eine Dicke im Bereich von 10 µm oder mehr und 30 µm oder weniger aufweist.

7. Dekormaterial (20), umfassend:
die Dekorfolie (10) nach einem der Ansprüche 1 bis 6;
eine Haftschicht (11), die auf einer Oberfläche der thermoplastisches-Harz-Substratschicht (1) der Dekorfolie (10) auf einer Seite vorgesehen ist, die der der Musterschicht (2) zugewandten Seite gegenüberliegt; und
ein Substrat, das über die Haftschicht (11) an der thermoplastisches-Harz-Substratschicht (1) haftet.

8. Verfahren zur Herstellung einer Dekorfolie (10), umfassend die folgenden Schritte:
Bilden einer Musterschicht (2) auf einer Oberfläche einer thermoplastisches-Harz-Substratschicht (1);
Bilden einer transparenten thermoplastischen Harzschicht (4) auf der Musterschicht (2); und
Bilden einer Oberflächenschutzschicht (7) auf der transparenten thermoplastischen Harzschicht (4), wobei
der Schritt des Bildens der Oberflächenschutzschicht (7) aus einem Schritt des Bildens einer oder mehrerer erster Oberflächenschutzschichten (5) auf der transparenten thermoplastischen Harzschicht (4) und einem Schritt des Bildens einer zweiten Oberflächenschutzschicht (6) als eine äußerste Schicht auf der ersten Oberflächenschutzschicht (5) aufgebaut ist,
der Schritt des Bildens der zweiten Oberflächenschutzschicht (6) ein Schritt des Bildens der zweiten Oberflächenschutzschicht (6) durch Aufbringen einer Beschichtungsflüssigkeit, die ein UV-härtbares Harz enthält, auf der ersten Oberflächenschutzschicht (5) und anschließende Bestrahlung mit UV-Licht der Wellenlänge 365 nm mit einer integrierten Lichtmenge im Bereich von 100 mJ/cm² oder mehr und weniger als 400 mJ/cm² ist, und
die transparente thermoplastische Harzschicht (4) ein Harz auf Polyethylenbasis oder ein Harz auf Polypropylenbasis mit einer Dicke im Bereich von 30 µm oder mehr und 200 µm oder weniger ist, und die Gesamtdicke im Bereich von 40 µm oder mehr und weniger als 500 µm liegt.

9. Verfahren zum Herstellen einer Dekorfolie (10) nach Anspruch 8, wobei der Schritt des Bildens einer transparenten thermoplastischen Harzschicht (4) auf der Musterschicht (2) das Bilden einer transparenten Haftschicht (3) und der transparenten thermoplastischen Harzschicht (4) auf der Musterschicht (2) durch Coextrusion umfasst.

## Revendications

1. Feuille décorative (10) comprenant :
une couche de substrat de résine thermoplastique (1) ;
une couche de motif (2) ;
une couche de résine thermoplastique transparente (4) ; et
une couche de protection de surface (7), qui sont disposées au moins dans cet ordre, dans laquelle
la couche de protection de surface (7) est composée d'une ou plusieurs premières couches de protection de surface (5) disposées sur la couche de résine thermoplastique transparente (4), et une seconde couche de protection de surface (6) prévue en tant que couche la plus à l'extérieur ayant un résultat d'essai selon la norme européenne EN16094 de 3 ou plus et pouvant être obtenue par application d'un liquide de revêtement contenant une résine durcissable aux UV et irradiation ultérieure avec une lumière UV d'une longueur d'onde de 365 nm avec une quantité de lumière intégrée dans une plage de 100 mJ/cm² ou plus et inférieure à 400 mJ/cm²,
la première couche de protection de surface (5) est formée avec une épaisseur de film de 1 µm ou plus et inférieure à 30 µm,
la couche de résine thermoplastique transparente (4) est une résine à base de polyéthylène ou une résine à base de polypropylène ayant une épaisseur dans une plage de 30 µm ou plus et 200 µm ou moins, et
une épaisseur globale est dans une plage de 40 µm ou plus et inférieure à 500 µm.

2. Feuille décorative (10) selon la revendication 1, dans laquelle la couche de substrat de résine thermoplastique (1) est une résine à base de polyoléfine ou une résine à base de polyester ayant une épaisseur dans une plage de 10 µm ou plus et de 200 µm ou moins.

3. Feuille décorative (10) selon la revendication 1 ou 2, dans laquelle la couche de résine thermoplastique transparente (4) a une épaisseur dans une plage de 50 µm ou plus et 150 µm ou moins.

4. Feuille décorative (10) selon l'une quelconque des revendications 1 à 3, comprenant en outre une couche d'adhésif transparente (3), la couche d'adhésif transparente (3) étant disposée sur la couche de motif (2) et la couche de résine thermoplastique transparente (4) étant disposée sur la couche d'adhésif transparente (3).

5. Feuille décorative (10) selon la revendication 4, dans laquelle la couche d'adhésif transparente (3) est une résine à base de polyéthylène ou une résine à base de polypropylène ayant une épaisseur dans une plage de 5 µm ou plus et 30 µm ou moins.

6. Feuille décorative (10) selon la revendication 5, dans laquelle la couche d'adhésif transparente (3) a une épaisseur dans une plage de 10 µm ou plus et 30 µm ou moins.

7. Matériau décoratif (20) comprenant :
la feuille décorative (10) selon l'une quelconque des revendications 1 à 6 ;
une couche d'adhésif (11) disposée sur une surface de la couche de substrat de résine thermoplastique (1) de la feuille décorative (10) sur un côté opposé à celui faisant face à la couche de motif (2) ; et
un substrat qui adhère à la couche de substrat de résine thermoplastique (1) par l'intermédiaire de la couche d'adhésif (11).

8. Procédé pour produire une feuille décorative (10), comprenant les étapes de :
formation d'une couche de motif (2) sur une surface d'une couche de substrat de résine thermoplastique (1) ;
formation d'une couche de résine thermoplastique transparente (4) sur la couche de motif (2) ; et
formation d'une couche de protection de surface (7) sur la couche de résine thermoplastique transparente (4), dans lequel
l'étape de formation de la couche de protection de surface (7) est composée d'une étape de formation d'une ou plusieurs premières couches de protection de surface (5) sur la couche de résine thermoplastique transparente (4), et d'une étape de formation d'une seconde couche de protection de surface (6) en tant que couche la plus à l'extérieur sur la première couche de protection de surface (5),
l'étape de formation de la seconde couche de protection de surface (6) est une étape de formation de la seconde couche de protection de surface (6) par application d'un liquide de revêtement contenant une résine durcissable aux UV sur la première couche de protection de surface (5) et irradiation ultérieure avec une lumière UV ayant une longueur d'onde de 365 nm avec une quantité de lumière intégrée dans une plage de 100 mJ/cm² ou plus et inférieure à 400 mJ/cm², et
la couche de résine thermoplastique transparente (4) est une résine à base de polyéthylène ou une résine à base de polypropylène avec une épaisseur dans une plage de 30 µm ou plus et 200 µm ou moins, et une épaisseur globale est dans une plage de 40 µm ou plus et inférieure à 500 µm.

9. Procédé de production d'une feuille décorative (10) selon la revendication 8, dans lequel l'étape de formation d'une couche de résine thermoplastique transparente (4) sur la couche de motif (2) comprend la formation d'une couche d'adhésif transparente (3) et de la couche de résine thermoplastique transparente (4) sur la couche de motif (2) par coextrusion.
